# EUROPEAN PATENT SPECIFICATION

(11) **EP 2 498 565 B1**
(45) Date of publication and mention of the grant of the patent: **10.05.2017**
(21) Application number: 12158735.6
(22) Date of filing: 09.03.2012
(51) Int. Cl.: H04W 74/02, H04W 88/04, H04W 84/22, H04W 88/08

(54) **Channel occupying method and portable AP apparatus**
Kanalbelegungsverfahren und tragbarer AP-Apparat
Procédé d'occupation de canal et appareil AP portable

(30) Priority: 11.03.2011 CN 201110059794
(43) Date of publication of application: 12.09.2012
(73) Proprietor: Huawei Device Co., Ltd., Longgang District Shenzhen Guangdong 518129 (CN)
(72) Inventor: Zhang, Liwei, 518129 Shenzhen Guangdong (CN); Yang, Jianping, 518129 Shenzhen Guangdong (CN)
(74) Representative: Thun, Clemens

(56) References cited:
- WO-A2-2008/007375
- US-A1- 2002 163 933
- US-A1- 2004 253 996
- US-A1- 2009 175 251

## Description

### FIELD OF THE INVENTION

The present invention relates to the field of wireless communications, and in particular, to a channel occupying method, a mobile AP and an external STA.

### BACKGROUND OF THE INVENTION

With the development of wireless communication technologies, a mobile access point (AP, Access Point) has been gradually and widely applied, and has functions of both an AP and a station (STA, Station), where the STA is a client of a wireless network, and the AP is also referred to as a wireless access node or hot spot, and is used to enable the STA to access the Internet. For example, a mobile phone may be a common mobile AP, which is equipped with the function of the STA: serving as a client apparatus for Internet surfing, and meanwhile, some smart mobile phones are further equipped with the function of the AP: externally connected to several client apparatuses, and used to provide an Internet surfing function for other client apparatuses.

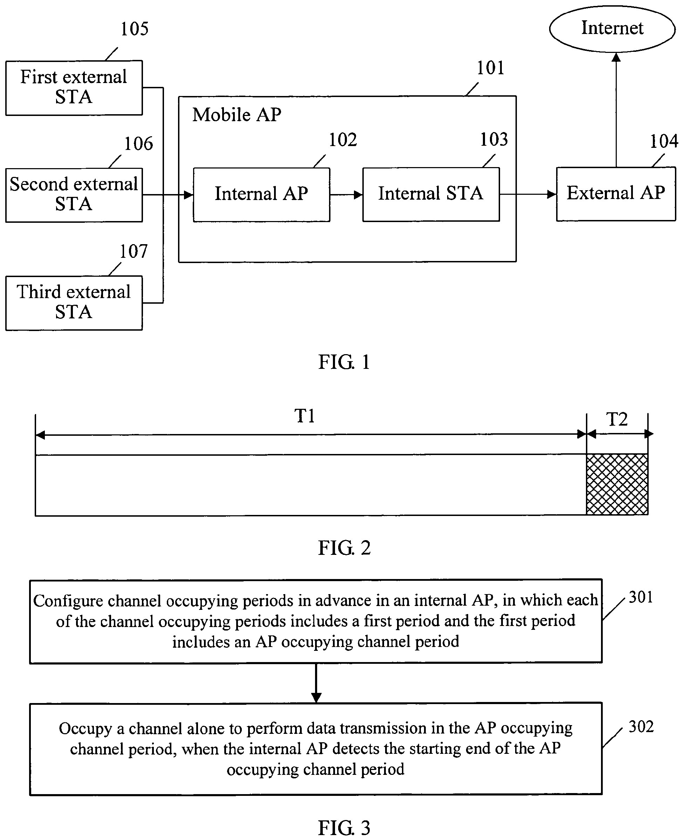

A mobile AP in the prior art is introduced below. FIG. 1 is a schematic structural diagram of a mobile AP in the prior art, and as shown in FIG 1, a mobile AP 101 includes: an internal AP 102 and an internal STA 103.

The internal STA 103 is connected to an external AP 104, and the internal STA 103 accesses the Internet through the external AP 104. It should be noted that, the internal STA 103 is a main functional module for implementing the Internet surfing function of the mobile AP 101, and the internal STA 103 is not externally connected to other client apparatuses any more.

The internal AP 102 may be externally connected to several client apparatuses, and used to provide the Internet surfing function for other client apparatuses; generally, the number of external client apparatuses is one to three, and herein, only three external client apparatuses are taken as an example in FIG. 1. As shown in FIG. 1, the internal AP 102 is connected to a first external STA 105, a second external STA 106, and a third external STA 107 simultaneously, and meanwhile, the internal AP 102 is further connected to the internal STA 103, and is used to enable the first external STA 105, the second external STA 106, and the third external STA 107 to access the Internet through the internal STA 103 and the external AP 104 that is connected to the internal STA 103.

It should be noted that, the internal AP 102 and the external AP 104 have the same function and structure, and are both used to enable the STA to the Internet. The internal STA 103, the first external STA 105, the second external STA 106, and the third external STA 107 have the same function and structure, and are all clients of a wireless network.

It can be seen that, the internal AP 102, the internal STA 103, the first external STA 105, the second external STA 106, and the third external STA 107 all access the Internet through the external AP 104, and if the internal AP 102, the internal STA 103, the first external STA 105, the second external STA 106, and the third external STA 107 are all regarded as independent stations, each station preempts the same channel to perform network data transmission.

Below, by taking the internal AP 102 as an example, a channel preempting method in the prior art is specifically introduced.

A channel occupying period is configured in the AP 102 in advance. FIG. 2 is a schematic diagram of a channel occupying period in the prior art, FIG. 2 only shows one channel occupying period, and structures of channel occupying periods are completely the same. As shown in FIG 2, a channel occupying period includes a first period T1 and a second period T2; in the first period T1, each station adopts a distributed coordination function (DCF, Distributed Coordination Function) method to perform channel occupying, and this method is also referred to as a method for carrier monitor multiple access with collision avoidance; the second period T2 is the delay time, which is used to space first periods T1 in adjacent channel occupying periods, and after the second period T2 ends, the process enters a next channel occupying period, so the cycle repeats in this way.

When detecting that a starting end of a first period T1 of a channel occupying period is approaching, the internal AP 102 starts to adopt the DCF method to preempt a channel against other stations. The DCF method is specifically as follows: the internal AP 102 monitor an idle state of a network, so as to detect whether other stations are transmitting data packets, and if the network is in the idle state, the internal AP 102 occupies the channel to transmit a data packet, and if the network is in a busy state, the internal AP 102 continues monitoring the transmission of a current data packet; after the transfer of the current data packet ends, the internal AP 102 further continues to wait for a time interval, and when the time interval ends, if still no station transfers a data packet, the internal AP 102 may occupy the channel to perform transmission.

For other stations, the foregoing method is also adopted to occupy a channel.

It should be noted that, the size of a data packet is limited in the prior art, and a duration of a first period T1 may undoubtedly be used to transmit a data packet completely.

It can be seen that, the DCF method in the prior art can coordinate multiple stations to access a channel, and no priority level is specified for each station to occupy the channel, thereby ensuring that all stations can fairly occupy the channel. In other words, in the prior art, the internal AP 102, the internal STA 103, and the STAs (the first external STA 105, the second external STA 106, and the third external STA 107) externally connected to the mobile AP 101 adopt the DCF method to perform channel contention in the first period T 1.

However, the internal AP in the prior art participates in the channel contention, and the internal AP can perform transmission only when the internal AP preempts a channel successfully, so the data transmission rate of the internal AP in the prior art is low.

In US 2009/175251 A1, a media center system comprises a first wireless controller, operative to communicate with a first set of devices on a first WLAN using a first wireless standard; a first network processor coupled to the first wireless controller and operative to establish wireless communication over a first channel with the first set of devices on the first WLAN; a second wireless controller operative to communicate with a second set of devices on a second WLAN using a second wireless standard, the second wireless controller substantially dedicated for multimedia content delivery; and a second network processor coupled to the second wireless controller and operative to establish wireless communication over a second channel with the second set of devices on the second WLAN, the second channel being different than the first channel.

And US 2002/0163933 A1 discloses a QoS, Quality of Service, support by means of a TCMA, Tiered Contention Multiple Access, distributed medium access protocol that schedules transmission of different types of traffic, based on their service quality specifications. A wireless station is supplied with data from a source having a lower QoS priority QoS(A), such as file transfer data. Another wireless station is supplied with data from a source having a higher QoS priority QoS(B), such as voice and video data. Each wireless station can determine the urgency class of its pending packets according to a scheduling algorithm. File transfer data is assigned a lower urgency class and voice and video data is assigned a higher urgency class. There are several urgency classes which indicate the desired ordering. Pending packets in a given urgency class are transmitted before transmitting packets of a lower urgency class by relying on class-differentiated UATs, Urgency Arbitration Times, which are the idle time intervals required, before the random backoff counter (backoff means moving backwards from a certain position) is decreased. Furthermore, packets are reclassified in real time with a scheduling algorithm that adjusts the class assigned to packets based on observed performance parameters and according to negotiated QoS-based requirements. Further, for packets assigned the same arbitration time, additional differentiation into more urgency classes is achieved in terms of the contention resolution mechanism employed, thus yielding hybrid packet prioritization methods. An Enhanced DCF, Distribution Coordination Function, Parameter Set is contained in a control packet sent by the AP, access point, to the associated stations, which contains class differentiated parameter values necessary to support the TCMA. Foregoing parameters can be changed based on different algorithms to support call admission and flow control functions and to meet the requirements of service level agreements.

### SUMMARY OF THE INVENTION

The present invention provides a channel occupying method as set forth in claim 1, which can increase the data transmission rate of an internal AP in a mobile AP.
The present invention provides a portable wireless access point, AP apparatus as set forth in claim 3, which can increase the data transmission rate of an internal AP in the mobile AP.

Technical solutions of the embodiments of the present invention are implemented as follows.

A channel occupying method is provided, which is applied to a portable wireless access point, AP, apparatus, comprising an internal access point, AP, and an internal station STA, where the method comprises: configuring channel occupying periods in the internal AP in advance, each of the channel occupying periods comprises a first period, and the first period comprises an AP occupying channel period, and the method further comprises: when the internal AP detects a starting end of the AP occupying channel period, occupying a channel alone in the AP occupying channel period to perform data transmission, wherein the internal AP is connected to at least one external STA and the method further comprises:
configuring channel occupying periods in the internal STA and the external STA in advance, wherein each of the channel occupying periods comprises the first period, and the first period further comprises a contention period; and
when the internal STA and the external STA detect a starting end of the contention period, adopting a distributed coordination function DCF method in contention for a channel to perform data transmission in the contention period;
wherein the method for configuring the channel occupying periods in the internal STA and the external STA comprises:
   setting a duration of the AP occupying channel period and a duration of the contention period according to the number of external STAs, wherein when the number of external STAs is one, a ratio of the duration of the AP occupying channel period to the duration of the contention period is 1:1; and when the number of external STAs is greater than one, a ratio of the duration of the AP occupying channel period to the duration of the contention period is 3:2.

A portable wireless access point AP apparatus is provided, the apparatus comprising an internal AP and an internal station STA, the internal STA is configured to access the Internet through an external AP, the internal AP is configured to access the Internet through the internal STA and an external STA, and the internal AP comprises: a first configuration module and a first transmission module, wherein the first configuration module is adapted to configure channel occupying periods in the internal AP in advance, each of the channel occupying periods comprises a first period, and the first period comprises an AP occupying channel period and the first transmission module is adapted to detect the channel occupying period, and when a starting end of the AP occupying channel period in the channel occupying period is detected, occupy a channel alone in the AP occupying channel period to perform data transmission, wherein the internal STA comprises: a second configuration module and a second transmission module, wherein the second configuration module is adapted to configure channel occupying periods in the internal STA in advance, each of the channel occupying periods comprises the first period, and the first period further comprises a contention period; and
the second transmission module is adapted to detect the channel occupying period, and when a starting end of the contention period in the channel occupying period is detected, adopt a distributed coordination function DCF method in contention for a channel in the contention period to perform data transmission,
wherein, in order to configure the channel occupying periods in the internal STA, the second configuration module is adapted to set a duration of the AP occupying channel period and a duration of the contention period according to the number of external STAs,
wherein when the number of external STAs is one, a ratio of the duration of the AP occupying channel period to the duration of the contention period is 1:1; and when the number of external STAs is greater than one, a ratio of the duration of the AP occupying channel period to the duration of the contention period is 3:2.

According to the technical solutions of the embodiments of the present invention, channel occupying periods are configured in advance in an internal AP, each of the channel occupying periods includes a first period, and the first period includes an AP occupying channel period; when detecting a starting end of the AP occupying channel period, the internal AP occupies a channel alone in the AP occupying channel period to perform data transmission. It can be seen that, in the embodiments of the present invention, the AP occupying channel period is configured in each of the channel occupying periods so as to be dedicated to the internal AP, and the internal AP dispenses with participation in channel contention, thereby increasing the data transmission rate of the internal AP.

### BRIEF DESCRIPTION OF THE DRAWINGS

FIG. 1 is a schematic structural diagram of a mobile AP in the prior art;
FIG. 2 is a schematic diagram of a channel occupying period in the prior art;
FIG. 3 is a flow chart of a channel occupying method according to an embodiment of the present invention;
FIG. 4 is a schematic diagram of a channel occupying period according to an embodiment of the present invention; and
FIG. 5 is a schematic structural diagram of a mobile AP according to an embodiment of the present invention.

### DETAILED DESCRIPTION OF THE EMBODIMENTS

To make the objectives, technical solutions and merits of the present invention more comprehensive, the solutions of the present invention are further described below in detail with reference to accompanying drawings and embodiments.

### Embodiment 1

FIG. 3 is a flow chart of a channel occupying method according to an embodiment of the present invention. As shown in FIG. 3, the method includes the following steps.

Step 301: Configure channel occupying periods in an internal AP in advance, where each of the channel occupying periods includes a first period T1 and a second period T2, and the first period T1 includes an AP occupying channel period (APP, Access Point Period).

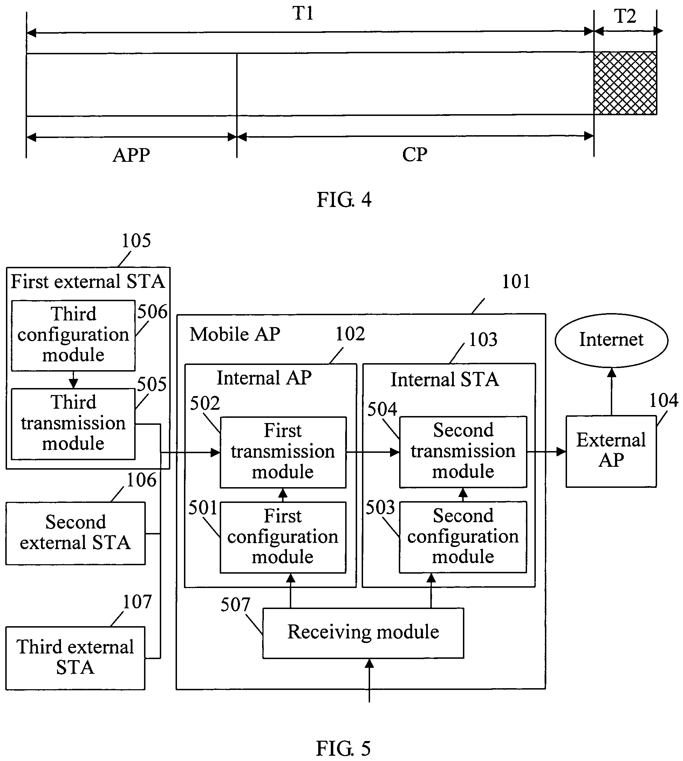

FIG. 4 is a schematic diagram of a channel occupying period according to the embodiment of the present invention, FIG. 4 only shows one channel occupying period, and structures of channel occupying periods are completely the same. As shown in FIG. 4, a channel occupying period includes a first period T1 and a second period T2, where the duration of the first period T1 and the duration of the second period T2 may be the same as those in the prior art, the second period T2 is delay time, and after the second period T2 ends, the process enters a next channel occupying period.

In the prior art, in the first period T1, the internal AP 102, the internal STA 103, and the STAs (the first external STA 105, the second external STA 106, and the third external STA 107) externally connected to the mobile AP 101 adopt the DCF method to perform channel contention.

However, in the embodiment of the present invention, the internal AP 102 is regarded as a type of group, other STAs are regarded as another type of group, and the other STAs include: the internal STA 103, the first external STA 105, the second external STA 106, and the third external STA 107. The first period T1 is divided into two time segments, and the two time segments are used for data transmission of the two types of groups, respectively. Specifically, as shown in FIG. 4, the first period T1 includes an AP occupying channel period (APP) and a contention period (CP, Contention Period), and the APP is used for the internal AP 102 to exclusively enjoy a channel, that is to say, in the APP, the internal AP 102 does not need to contend for a channel with other STAs, and may occupy a channel alone to perform data transmission. However, in the CP, other STAs still adopt the DCF manner in the prior art to perform channel contention.

Configuration of the channel occupying period is implemented in a media access control (MAC, Media Access Control) layer, and a configuration method is as follows: setting the duration of the AP occupying channel period and the duration of the contention period according to the number of external STAs. Specifically, if the number of external STAs is large, the ratio of the duration of the APP to the duration of the CP is set to be large, and on the contrary, if the number of external STAs is small, the ratio of the duration of the APP to the duration of the CP is set to be small. For example, if the number of external STAs is one, the ratio of the duration of the APP to the duration of the CP may be configured to 1: 1, and if it is assumed that the duration of the first period T1 is 20 milliseconds, the duration of the APP may be configured to 10 milliseconds, and the duration of the CP may be configured to 10 milliseconds; if the number of external STAs is greater than one, the ratio of the duration of the APP to the duration of the CP may be configured to 3: 2, and if it is assumed that the duration of the first period T1 is 20 milliseconds, the duration of the APP may be configured to 12 milliseconds, and the duration of the CP may be configured to 8 milliseconds.

Furthermore, the configuration may also be performed according to a user instruction. Specifically, a user instruction is received, the user instruction indicates the duration of the APP and the duration of the CP, and the configuration is performed according to the user instruction. For example, on a user interface of a mobile AP, two input boxes may be provided to a user, where one input box is used to receive the APP duration input by the user, the other input box is used to receive the CP duration input by the user, and in a MAC layer, the duration of the APP and the duration of the CP are configured to corresponding values input by the user in the input boxes, respectively. Definitely, in actual applications, other methods may be further adopted to receive the user instruction, and the example is provided herein only for illustration.

In the actual applications, in order to prevent improper configuration performed by the user, several options may also be provided, and are displayed to the user in a read-only manner, and each option denotes the duration of the APP and the duration of the CP, to be provided to the user for selection.

Step 302: Occupy a channel to perform data transmission in the APP when the internal AP detects a starting end of the APP.

When detecting the starting end of the CP, other STAs preempt the channel to perform data transmission in the CP, and the method for preempting a channel may be the DCF method.

It can be seen that, in this step, the internal AP can exclusively enjoy the channel to perform data transmission in the APP; in the CP, the internal AP does not occupy the channel any more, and other STAs adopt the DCF method in the prior art to perform channel contention.

It can be seen that, in the embodiment of the present invention, because each channel occupying period is configured with an APP so as to be dedicated to the internal AP, the internal AP dispenses with participation in channel contention, thereby increasing the data transmission rate of the internal AP.

Meanwhile, in the prior art, the first external STA 105, the second external STA 106, and the third external STA 107 are all externally connected onto the internal AP 102, and data packets which are required to be transmitted by the first external STA 105, the second external STA 106 and/or the third external STA 107 are all required to be transmitted through the internal AP 102, so in the prior art, each external STA has a low data transmission rate because of the limitation of the internal AP 102, and especially when the number of external STAs is large, such case is particularly highlighted. In the embodiment of the present invention, because the data transmission rate of the internal AP is increased, the data transmission rate of the STA externally connected to a mobile AP is also indirectly increased.

So far, the process ends.

In the embodiment of the present invention, the first period T1 in the channel occupying period is partitioned into two time segments: an APP and a CP. The internal AP 102 in the mobile AP 101 does not participate in channel preemption, and exclusively enjoys a channel to perform data transmission in the APP, but in the CP, the STA externally connected to the internal AP 102 and the internal STA 103 in the mobile AP 101 adopt the DCF method to perform channel contention. It can be seen that, because each channel occupying period is configured with an APP so as to be dedicated to the internal AP 102, the internal AP 102 dispenses with participation in channel contention, thereby increasing the data transmission rate of the internal AP 102.

### Embodiment 2

Based on the introduction on the channel occupying method, FIG. 5 is a schematic structural diagram of a mobile AP and an external STA according to the embodiment of the present invention. As shown in FIG. 5, a mobile AP 101 includes an internal AP 102 and an internal station STA 103, the internal STA 103 accesses the Internet through an external AP 104, and the internal AP 102 is connected to at least one external STA (a first external STA 105, a second external STA 106, and a third external STA 107), and enables the external STA to access the Internet.

The internal AP 102 includes: a first configuration module 501 and a first transmission module 502.

The first configuration module 501 is adapted to configure channel occupying periods in the internal AP 102 in advance, each of the channel occupying periods includes a first period, and the first period includes an AP occupying channel period.

The first transmission module 502 is adapted to detect the channel occupying period, and when a starting end of the AP occupying channel period in the channel occupying period is detected, occupy a channel alone in the AP occupying channel period to perform data transmission.

The internal STA 103 includes: a second configuration module 503 and a second transmission module 504.

The second configuration module 503 is adapted to configure channel occupying periods in the internal STA 103 in advance, each of the channel occupying periods includes a first period, and the first period further includes a contention period.

The second transmission module 504 is adapted to detect the channel occupying period, and when a starting end of the contention period in the channel occupying period is detected, adopt a distributed coordination function DCF method in contention for a channel in the contention period to perform data transmission.

The apparatus further includes: a receiving module 507.

The receiving module 507 is adapted to receive an external instruction, and the external instruction is used to indicate the duration of the AP occupying channel period and the duration of the contention period.

The first configuration module 501 and the second configuration module 503 configure the duration of the AP occupying channel period and the duration of the contention period according to the external instruction.

An external station STA is provided, which includes: a third configuration module 506 and a third transmission module 505.

The third configuration module 506 is adapted to configure channel occupying periods in the external STA in advance, each of the channel occupying periods includes a first period, and the first period includes a contention period.

The third transmission module 505 is adapted to detect the channel occupying period, and when a starting end of the contention period in the channel occupying period is detected, adopt a distributed coordination function DCF method in contention for a channel in the contention period to perform data transmission.

For the detailed introduction about the apparatus part, reference may be made to the illustration of the method part, and details are not repeated herein.

To sum up, in the embodiments of the present invention, channel occupying periods are configured in an internal AP in advance, each of the channel occupying periods includes a first period, and the first period includes an AP occupying channel period; when the internal AP detects a starting end of the AP occupying channel period, the internal AP occupies a channel alone in the AP occupying channel period to perform data transmission. It can be seen that, in the embodiment of the present invention, the AP occupying channel period is configured in each of the channel occupying periods so as to be dedicated to the internal AP, and the internal AP dispenses with participation in channel contention, thereby increasing the data transmission rate of the internal AP.

## Claims

1. A channel occupying method, applied to a portable wireless access point, AP, apparatus (101) comprising an internal access point AP (102) and an internal station STA (103), wherein the method comprises:
configuring channel occupying periods in the internal AP (102) in advance, each of the channel occupying periods comprises a first period, and
the first period comprises an AP occupying channel period, and
the method further comprises:
when the internal AP (102) detects a starting end of the AP occupying channel period, occupying a channel alone in the AP occupying channel period to perform data transmission, wherein the internal AP (102) is connected to at least one external STA (105, 106, 107), and the method further comprises:
configuring channel occupying periods in the internal STA (103) and the external STA (105) in advance, wherein each of the channel occupying periods comprises the first period, and the first period further comprises a contention period; and
when the internal STA (103) and the external STA (105) detect a starting end of the contention period, adopting a distributed coordination function DCF method in contention for a channel to perform data transmission in the contention period;
wherein the method for configuring the channel occupying periods in the internal STA (103) and the external STA (105) comprises: setting a duration of the AP occupying channel period and a duration of the contention period according to the number of external STAs (105, 106, 107), wherein when the number of external STAs is one , a ratio of the duration of the AP occupying channel period to the duration of the contention period is 1:1; and when the number of external STAs is greater than one, a ratio of the duration of the AP occupying channel period to the duration of the contention period is 3:2.

2. The method according to claim 1, further comprising: receiving an external instruction, wherein the external instruction is configured to indicate a duration of the AP occupying channel period and a duration of the contention period; and configuring the duration of the AP occupying channel period and the duration of the contention period according to the external instruction.

3. A portable wireless access point, AP, apparatus (101), the apparatus comprising an internal AP (102) and an internal station STA (103), wherein the internal STA (103) is configured to access the Internet through an external AP (104), the internal AP (102) is configured to access the Internet through the internal STA (103) and an external STA (105), and the internal AP (102) comprises:
a first configuration module (501) and a first transmission module (502), wherein the first configuration module (501) is adapted to configure channel occupying periods in the internal AP (102) in advance, each of the channel occupying periods comprises a first period, and the first period comprises an AP occupying channel period; and
the first transmission module (502) is adapted to detect the channel occupying period, and when a starting end of the AP occupying channel period in the channel occupying period is detected, occupy a channel alone in the AP occupying channel period to perform data transmission, wherein the internal STA (103) comprises: a second configuration module (503) and a second transmission module (504), wherein the second configuration module (503) is adapted to configure channel occupying periods in the internal STA (103) in advance, each of the channel occupying periods comprises the first period, and the first period further comprises a contention period; and
the second transmission module (504) is adapted to detect the channel occupying period, and when a starting end of the contention period in the channel occupying period is detected, adopt a distributed coordination function DCF method in contention for a channel in the contention period to perform data transmission,
wherein, in order to configure the channel occupying periods in the internal STA (103), the second configuration module (504) is adapted to set a duration of the AP occupying channel period and a duration of the contention period according to the number of external STAs (105, 106, 107),
wherein when the number of external STAs is one, a ratio of the duration of the AP occupying channel period to the duration of the contention period is 1:1; and when the number of external STAs is greater than one, a ratio of the duration of the AP occupying channel period to the duration of the contention period is 3:2.

4. The apparatus according to claim 3, further comprising: a receiving module (507), wherein the receiving module (507) is adapted to receive an external instruction, and the external instruction is configured to indicate a duration of the AP occupying channel period and a duration of the contention period; and the first configuration module (501) and the second configuration module (503) are adapted to configure the duration of the AP occupying channel period and the duration of the contention period according to the external instruction.

## Patentansprüche

1. Kanalbelegungsverfahren angewandt auf ein tragbares drahtloses Zugangspunkt(AP(Access Point))-Gerät (101) mit einem inneren Zugangspunkt AP (102) und einer Innenstation STA (103), wobei das Verfahren umfasst:
Einrichten von Kanalbelegungsperioden in dem Innen- AP (102) im Voraus, wobei jede der Kanalbelegungsperioden eine erste Periode umfasst, und
die erste Periode eine AP-Belegungskanalperiode umfasst, und
das Verfahren weiterhin umfasst:
wenn der Innen-AP (102) ein Anfangsende der AP-Belegungskanalperiode erkennt, Belegen eines Kanals allein in der AP-Belegungskanalperiode zum Durchführen von Datenübertragung, wobei der Innen-AP (102) mit wenigstens einer Außen-STA (105, 106, 107) verbunden ist und das Verfahren weiterhin umfasst:
Einrichten von Kanalbelegungsperioden in der Innen-STA (103) und der Außen-STA (105) im Voraus, wobei jede der Kanalbelegungsperioden die erste Periode umfasst und die erste Periode weiterhin eine Konfliktperiode umfasst; und
wenn die Innen-STA (103) und die Außen-STA (105) ein Anfangsende der Konfliktperiode erkennen, Übernehmen eines DCF-Verfahrens (DCF = Distributed Coordination Function - verteilte Koordinationsfunktion) im Konflikt für einen Kanal zum Durchführen von Datenübertragung in der Konfliktperiode;
wobei das Verfahren zum Einrichten der Kanalbelegungsperioden in der Innen-STA (103) und der Außen-STA (105) umfasst: Einstellen einer Dauer der AP-Belegungskanalperiode und einer Dauer der Konfliktperiode gemäß der Anzahl von Außen-STA (105, 106, 107), wobei, wenn die Anzahl von Außen-STA eins beträgt, ein Verhältnis der Dauer der AP-Belegungskanalperiode zu der Dauer der Konfliktperiode 1:1 beträgt; und wenn die Anzahl von Außen-STA größer als eins ist, ein Verhältnis der Dauer der AP-Belegungskanalperiode zur Dauer der Konfliktperiode 3:2 beträgt.

2. Verfahren nach Anspruch 1, weiterhin umfassend: Empfangen einer Außenanweisung, wobei die Außenanweisung eingerichtet ist zum Anzeigen einer Dauer der AP-Belegungskanalperiode und einer Dauer der Konfliktperiode; und Einrichten der Dauer der AP-Belegungskanalperiode und der Dauer der Konfliktperiode gemäß der Außenanweisung.

3. Tragbares drahtloses Zugangspunkt(AP)-Gerät (101), wobei das Gerät einen Innen-AP (102) und eine Innenstation STA (103) umfasst, wobei die Innen-STA (103) eingerichtet ist zum Zugreifen auf das Internet durch einen Außen-AP (104), der Innen-AP (102) eingerichtet ist zum Zugreifen auf das Internet durch die Innen-STA (103) und eine Außen-STA (105), und der Innen-AP (102) umfasst:
ein erstes Einrichtungsmodul (501) und ein erstes Übertragungsmodul (502), wobei das erste Einrichtungsmodul (501) zum Einrichten von Kanalbelegungsperioden in dem Innen-AP (102) im Voraus aufgebaut ist, jede der Kanalbelegungsperioden eine erste Periode umfasst und die erste Periode eine AP-Belegungskanalperiode umfasst;
und
das erste Übertragungsmodul (502) aufgebaut ist zum Erkennen der Kanalbelegungsperiode und, wenn ein Anfangsende der AP-Belegungskanalperiode in der Kanalbelegungsperiode erkannt wird, Belegen eines Kanals allein in der AP-Belegungskanalperiode zum Durchführen von Datenübertragung, wobei die Innen-STA (103) umfasst: ein zweites Einrichtungsmodul (503) und ein zweites Übertragungsmodul (504), wobei das zweite Einrichtungsmodul (503) aufgebaut ist zum Einrichten von Kanalbelegungsperioden in der Innen-STA (103) im Voraus, jede der Kanalbelegungsperioden die erste Periode umfasst und die erste Periode weiterhin eine Konfliktperiode umfasst; und
das zweite Übertragungsmodul (504) aufgebaut ist zum Erkennen der Kanalbelegungsperiode und, wenn ein Anfangsende der Konfliktperiode in der Kanalbelegungsperiode erkannt wird, Übernehmen eines DCF-Verfahrens (DCF = Distributed Coordination Function - verteilte Koordinationsfunktion) im Konflikt für einen Kanal in der Konfliktperiode zum Durchführen von Datenübertragung,
wobei zum Einrichten der Kanalbelegungsperioden in der Innen-STA (103) das zweite Einrichtungsmodul (504) aufgebaut ist zum Einstellen einer Dauer der AP-Belegungskanalperiode und einer Dauer der Konfliktperiode gemäß der Anzahl von Außen-STA (105, 106, 107),
wobei, wenn die Anzahl von Außen-STA eins beträgt, ein Verhältnis der Dauer der AP-Belegungskanalperiode zu der Dauer der Konfliktperiode 1:1 beträgt; und wenn die Anzahl von Außen-STA größer als eins ist, ein Verhältnis der Dauer der AP-Belegungskanalperiode zur Dauer der Konfliktperiode 3:2 beträgt.

4. Gerät nach Anspruch 3, weiterhin umfassend: ein Empfangsmodul (507), wobei das Empfangsmodul (507) aufgebaut ist zum Empfangen einer Außenanweisung und die Außenanweisung eingerichtet ist zum Anzeigen einer Dauer der AP-Belegungskanalperiode und einer Dauer der Konfliktperiode; und das erste Einrichtungsmodul (501) und das zweite Einrichtungsmodul (503) aufgebaut sind zum Einrichten der Dauer der AP-Belegungskanalperiode und der Dauer der Konfliktperiode gemäß der Außenanweisung.

## Revendications

1. Procédé d'occupation de canal, appliqué à un appareil de point d'accès, AP, sans fil portable (101) comprenant un point d'accès AP interne (102) et une station STA interne (103), le procédé comprenant :
la configuration à l'avance de périodes d'occupation de canal dans l'AP interne (102),
chacune des périodes d'occupation de canal comprenant une première période, et
la première période comprenant une période de canal d'occupation d'AP, et
le procédé comprenant en outre :
quand l'AP interne (102) détecte un début de la période de canal d'occupation d'AP, l'occupation d'un canal seul dans la période de canal d'occupation d'AP pour effectuer une transmission de données, dans lequel l'AP interne (102) est connecté à au moins une STA externe (105, 106, 107), et le procédé comprenant en outre :
la configuration à l'avance de périodes d'occupation de canal dans la STA interne (103) et la STA externe (105), dans lequel chacune des périodes d'occupation de canal comprend la première période, et la première période comprend en outre une période de contention ; et
quand la STA interne (103) et la STA externe (105) détectent un début de la période de contention, l'adoption d'un procédé à fonction de coordination distribuée DCF en contention pour un canal afin d'effectuer une transmission de données dans la période de contention ;
dans lequel le procédé de configuration des périodes d'occupation de canal dans la STA interne (103) et la STA externe (105) comprend : l'établissement d'une durée de la période de canal d'occupation d'AP et d'une durée de la période de contention conformément au nombre de STA externes (105, 106, 107), dans lequel quand le nombre de STA externes est un, un rapport de la durée de la période de canal d'occupation d'AP sur la durée de la période de contention est 1:1 ; et quand le nombre de STA externes est supérieur à un, un rapport de la durée de la période de canal d'occupation d'AP sur la durée de la période de contention est 3:2.

2. Procédé selon la revendication 1, comprenant en outre : la réception d'une instruction externe, dans lequel l'instruction externe est configurée pour indiquer une durée de la période de canal d'occupation d'AP et une durée de la période de contention ; et la configuration de la durée de la période de canal d'occupation d'AP et de la durée de la période de contention conformément à l'instruction externe.

3. Appareil de point d'accès, AP, sans fil portable (101), l'appareil comprenant un AP interne (102) et une station STA interne (103), dans lequel la STA interne (103) est configurée pour accéder à l'Internet par le biais d'un AP externe (104), l'AP interne (102) est configuré pour accéder à l'Internet par le biais de la STA interne (103) et une STA externe (105), et l'AP interne (102) comprend :
un premier module de configuration (501) et un premier module de transmission (502), dans lequel le premier module de configuration (501) est adapté pour configurer à l'avance des périodes d'occupation de canal dans l'AP interne (102), chacune des périodes d'occupation de canal comprenant une première période, et la première période comprenant une période de canal d'occupation d'AP, et
le premier module de transmission (502) est adapté pour détecter la période d'occupation de canal, et quand un début de la période de canal d'occupation d'AP dans la période d'occupation de canal est détecté, occuper un canal seul dans la période de canal d'occupation d'AP pour effectuer une transmission de données, dans lequel la STA interne (103) comprend : un second module de configuration (503) et un second module de transmission (504), dans lequel le second module de configuration (503) est adapté pour configurer à l'avance des périodes d'occupation de canal dans la STA interne (103), chacune des périodes d'occupation de canal comprenant la première période, et la première période comprenant en outre une période de contention ; et
le second module de transmission (504) est adapté pour détecter la période d'occupation de canal, et quand un début de la période de contention dans la période d'occupation de canal est détecté, adopter un procédé à fonction de coordination distribuée DCF en contention pour un canal dans la période de contention afin d'effectuer une transmission de données ;
dans lequel, afin de configurer les périodes d'occupation de canal dans la STA interne (103), le second module de configuration (504) est adapté pour établir une durée de la période de canal d'occupation d'AP et une durée de la période de contention conformément au nombre de STA externes (105, 106, 107),
dans lequel quand le nombre de STA externes est un, un rapport de la durée de la période de canal d'occupation d'AP sur la durée de la période de contention est 1:1 ; et
quand le nombre de STA externes est supérieur à un, un rapport de la durée de la période de canal d'occupation d'AP sur la durée de la période de contention est 3:2.

4. Appareil selon la revendication 3, comprenant en outre : un module de réception (507), dans lequel le module de réception (507) est adapté pour recevoir une instruction externe, et l'instruction externe est configurée pour indiquer une durée de la période de canal d'occupation d'AP et une durée de la période de contention ; et le premier module de configuration (501) et le second module de configuration (503) sont adaptés pour configurer la durée de la période de canal d'occupation d'AP et la durée de la période de contention conformément à l'instruction externe.
